# EUROPEAN PATENT APPLICATION

(11) **EP 4 134 543 A1**
(43) Date of publication of application: **15.02.2023**
(21) Application number: 21190331.5
(22) Date of filing: 09.08.2021
(51) Int. Cl.: F03D 7/02, F03D 13/25, B63B 77/10

(54) **METHOD OF STOPPING AN OPERATION OF A FLOATING WIND TURBINE**

(71) Applicant: Siemens Gamesa Renewable Energy A/S, 7330 Brande (DK)
(72) Inventor: Cavichioli Gonzaga, Carlos Alberto, 7100 Vejle (DK); Esbensen, Thomas, 7400 Herning (DK); Steffensen, Henrik, 8000 Århus (DK)
(74) Representative: SGRE-Association

(57) **Abstract**

It is described a method of stopping an operation of a floating wind turbine (1), said wind turbine (1) comprising a floating body (4), a tower (2) mounted to the floating body (4), a nacelle (3) mounted to the tower (2), a rotating hub rotatable mounted to the nacelle (3) and having a plurality of blades (6), and a generator connected to the hub for generating electric power. The method comprises the steps of: receiving a stop request for stopping the operation of a floating wind turbine (1); determining whether or not the stop request is non-critical to allow a delay or attenuation of stopping the operation of the floating wind turbine (1); and delaying or attenuating the stopping of the operation of the floating wind turbine, when the delay of stopping the operation of the floating wind turbine (1) is allowed, so as to attenuate a wind turbine pitch movement.

## Description

### Field of invention

The present invention relates to a method of stopping an operation of a floating wind turbine.

Floating wind turbines are complex systems with multiple variables and multiple degrees of freedom. Wind, wave and current loadings, which all are irregular by nature along with aerodynamical, structural and hydrodynamical couplings, as well as control actuations, all contribute to a highly complex dynamical behaviour.

EP 2 924 280 A1 discloses a method of controlling a floating-body wind turbine power generating apparatus including a wind turbine generator disposed on a floating body. The method comprises a pitch-angle increasing step of increasing a pitch angle of a blade of the wind turbine generator when the wind turbine generator is stopped, so that an aerodynamic braking force is applied to a rotor of the wind turbine generator, wherein, in the pitch-angle increasing step, a first change rate of the pitch angle of the blade in a first period during which the wind turbine generator is in an inclining motion toward an upwind side from a vertical direction due to sway of the floating body, is smaller than a second change rate of the pitch angle of the blade in a second period during which the wind turbine generator is in an inclining motion toward a downwind side from the vertical direction due to the sway of the floating body.

During the operation of a floating wind turbine, stop requests are associated with several alarms. Nonetheless, those profiles are optimized for turbines with a bottom fixed foundation, and a stop strategy can lead to an amplified floater motion when applied to the floating wind turbine. Therefore, a specific control strategy for determining a suitable shutdown strategy for a floating wind turbine is necessary.

### Summary of the Invention

It is the object to provide a method of stopping an operation of a floating wind turbine, which takes the above need into account. This object is achieved by the subject matter according to the independent claim. The present invention is further developed as set forth in the dependent claims.

According to an aspect of the invention, a method of stopping an operation of a floating wind turbine is provided. The wind turbine comprises a floating body, a tower mounted to the floating body, a nacelle mounted to the tower, a rotating hub rotatable mounted to the nacelle and having a plurality of blades, and a generator connected to the hub for generating electric power. The method comprises the steps of receiving a stop request for stopping the operation of a floating wind turbine; determining whether or not the stop request is non-critical to allow a delay or attenuation of stopping the operation of the floating wind turbine; and delaying or attenuating the stopping of the operation of the floating wind turbine, when the delay of stopping the operation of the floating wind turbine is allowed, so as to attenuate a wind turbine pitch movement

In an embodiment, a blade pitch angle of each blade is controlled based on a blade pitch angle reference, and the method comprises steps of detecting an amount of a floating body movement, a blade load moment and/or a tower top movement to determine whether a wind turbine pitch movement is upwind or downwind; after having received the stop request, selecting, based on the determination as to whether the wind turbine pitch movement is upwind or downwind (in particular whether the tower top movement is upwind or downwind), a cut-off frequency of a low-pass-filter for the blade pitch angle reference; if the wind turbine pitch movement is upwind, filtering the blade pitch angle reference by the low-pass filter having a first cut-off frequency; and if the wind turbine pitch movement is downwind, filtering the blade pitch angle reference by the low-pass filter having a second cut-off frequency; wherein the first cut-off frequency being lower than the second cut-off frequency. This embodiment is based on a linear filtering of the shutdown reference pitch angle profile instead of a rate limiting which is a nonlinear element. This control strategy adaptively filters the blade pitch reference in a non-critical shutdown with a bandwidth depending on different quantities such as tower top motion and/or blade load moment and/or floater motion.

In an embodiment, the wind turbine further comprises an additional blade actuator which is arranged at a surface of the blade, wherein the additional blade actuator is controlled based on an additional blade actuator reference, and the method comprises steps of detecting an amount of a floating body movement, a blade load moment and/or a tower top movement to determine whether a wind turbine pitch movement is upwind or downwind; after having received the stop request, selecting, based on the determination as to whether the wind turbine pitch movement is upwind or downwind, a cut-off frequency of another low-pass-filter for the additional blade actuator reference; if the wind turbine pitch movement is upwind, filtering the additional blade actuator reference by the other low-pass filter having a third cut-off frequency; and if the wind turbine pitch movement is downwind, filtering the blade additional blade actuator reference by the other low-pass filter having a fourth cut-off frequency; wherein the third cut-off frequency being lower than the fourth cut-off frequency.

In an embodiment, the method comprises the steps of detecting an amount of a floating body movement, a blade load moment and/or a tower top movement to determine whether a wind turbine pitch movement is upwind or downwind; delaying the stopping of the operation of the floating wind turbine if the wind turbine pitch movement is upwind; detecting when a tower top position is substantially at a most upwind position; and initiating the stopping of the operation of the floating wind turbine after the tower top position has substantially reached the most upwind position. This control strategy provides a time schedule for starting a shutdown procedure that is qualified for a delay.

In an embodiment, a power output from the generator is controlled based on a power output reference, and the method comprises steps of delaying the stopping of the operation of the floating wind turbine, while increasing the power output to reduce a rotor speed (i.e., a hub rotating speed); and initiating the stopping of the operation of the wind turbine after having reduced the rotor speed. This control strategy makes the floater motion well behaved using the power reference. In an embodiment, the stopping of the operation of the wind turbine can be achieved by increasing a blade pitch reference for increasing a blade pitch angle of the blades.

Advantageously, the present invention avoids extreme loads which potentially arise due to an unfavourable combination of high floater velocity, wind and wave conditions with a shutdown, as shutdowns may happen several times during the lifespan of the floating wind turbine. The present invention further provides an advantage in terms of shutdowns that are non-critical for an operation of the floating wind turbine by using a main actuation means, which is the blade pitch angle, combined with its starting time instant and the output power reference.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief description of the figures

- Fig. 1: shows a floating wind turbine and the different elements thereof; and
- Fig. 2: shows a flow chart of an embodiment of the method of stopping an operation of the floating wind turbine;
- Fig. 3: shows a block diagram of an embodiment of the method of stopping an operation of the floating wind turbine;
- Fig. 4: shows a flow chart of an embodiment of a method of stopping an operation of the floating wind turbine; and
- Fig. 5: shows a block diagram of an embodiment of the method of stopping an operation of the floating wind turbine.

### Detailed Description

The illustrations in the drawings are schematically. It is noted that in different figures, similar or identical elements are provided with the same reference signs.

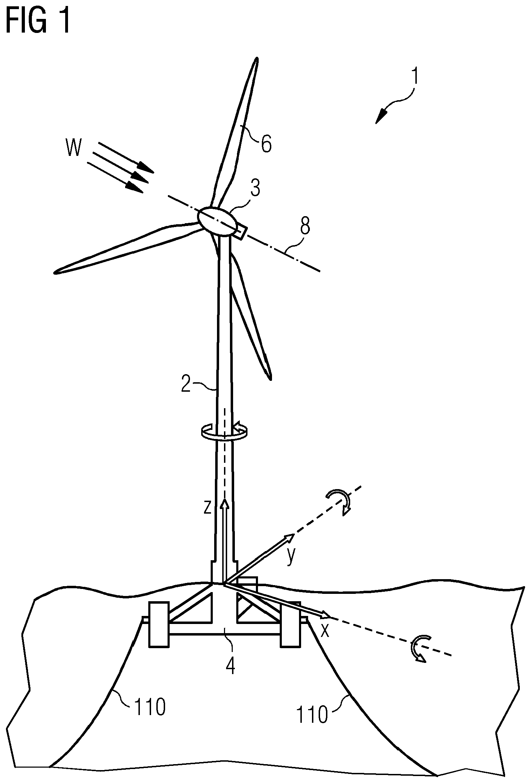

**Fig. 1** shows a floating wind turbine 1. The wind turbine 1 comprises a nacelle 3 and a tower 2. The nacelle 3 is mounted at the top of the tower 2. The nacelle 3 is mounted rotatable relative to the tower 2 by means of a yaw bearing in order to establish a nacelle yaw.

The wind turbine 1 also comprises a rotor or hub having, for example, three rotor blades 6. Each blade 6 can usually be rotated about a longitudinal axis of the blade 6 to establish a desired blade pitch or pitch angle of the blade 6.

The rotor is rotatable mounted relative to the nacelle 3 by means of a bearing. The rotor is mounted rotatable about a rotation axis 8. When the blades 6 are subjected to a wind W, they are rotated together with the rotor about the rotation axis 8.

The wind turbine 1 furthermore comprises a generator. The generator is accommodated within the nacelle 3. The generator is arranged and prepared for converting rotational energy from the rotor into electrical energy in the shape of an AC power.

The floating wind turbine 1 is an offshore wind turbine 1 comprising a floating hull 4 onto which the tower 2 is mounted. The hull 4 floats on a sea level of the sea. The hull 4 is connected the sea ground via mooring lines 110. The installed offshore wind turbine 1 floats in the water and is normally held in position by the mooring lines 110 which either stabilize the system or prevent the same from drifting away.

The floating wind turbine 1 has six individual degrees of freedom in which the wind turbine 1 may move. Namely three translations along a surge axis x, a sway axis y, and a heave axis z along with a floater roll rotation around the axis x, a floater pitch rotation around the axis y, and a floater yaw rotation around the axis z.

The floater pitch about the floater pitch axis y is thus different from the blade pitch because the pitch about the floater pitch axis y is the rotation of the floating structure (for example the tower 2 or the entire wind turbine 1) around its point of rotation, while the blade pitch defines the controlled pitch angle of the blades 6 about the longitudinal axis thereof. Furthermore, the floater yaw about the floater yaw axis z is different from a nacelle yaw because the floater yaw about the floater yaw axis z is the rotation around the vertical axis of the floating structure (for example the tower 2 or the entire wind turbine 1), while the nacelle yaw is the yaw of the nacelle 3 which can be measured relatively to the tower 2 and actively be controlled by the wind turbine 1.

For the sake of clarity, a floater pitch velocity in Fig. 1 is positive, whenever the rotation leads the tower top downwind and negative when the rotation leads the tower top upwind.

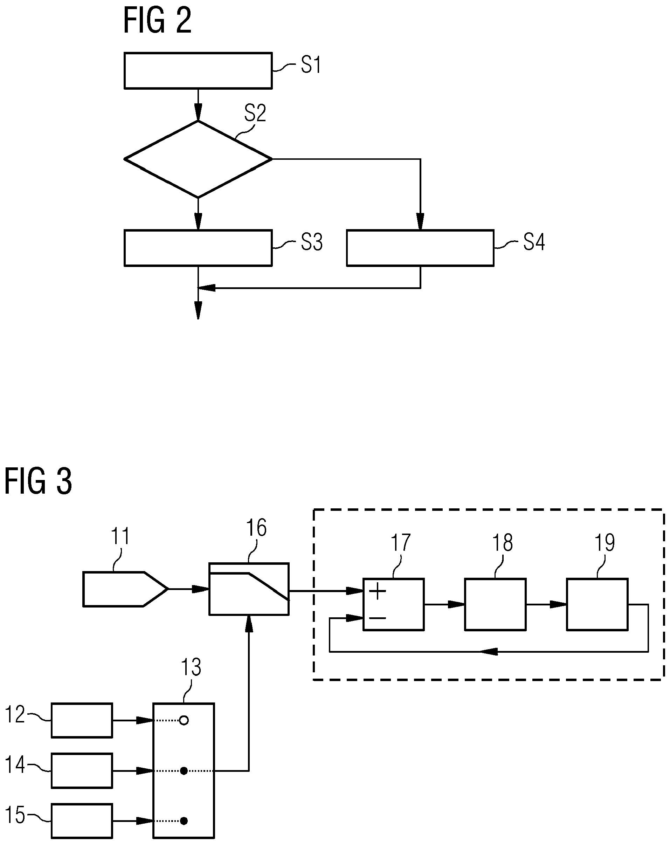

**Fig. 2** shows a flow chart of a method of stopping an operation of the floating wind turbine 1 according to an embodiment. In a step S1, a stop request for stopping the operation of a floating wind turbine 1 is received. In a step S2, it is determining whether or not the stop request is non-critical to allow a delay or attenuation of stopping the operation of the floating wind turbine 1. If the stop request is non-critical to allow a delay or attenuation of stopping the operation of the floating wind turbine 1, the method proceeds to a step S3, where the stopping of the operation of the floating wind turbine 1 is delayed or attenuated, so as to attenuate the wind turbine pitch movement. If the stop request is critical to not allow the delay or attenuation of stopping the operation of the floating wind turbine 1, the method proceeds to a step S4, where the operation of the floating wind turbine 1 can immediately be stopped.

**Fig. 3** shows a block diagram of an embodiment of the method of stopping an operation of the floating wind turbine 1, in particular an embodiment of step S3 in Fig. 2. Generally, a blade pitch angle of each blade 6 is controlled based on a blade pitch angle reference. Such blade pitch reference is input by a blade pitch angle reference block 11 into a low-pass filter 16.

An amount of a floating body movement, a blade load moment and/or a tower top movement is detected in a floating body movement detecting block 12 to determine whether a wind turbine pitch movement is upwind or downwind. I.e., the blade load moment is expected to change in accordance to a floating foundation pitch movement due to a change in effective wind speed. The amount of the floating body movement is input in a selection block 13. In addition, a first cut-off frequency 14 for an upwind movement of the wind turbine 1 is input into the selection block 13, and a second cut-off frequency 15 for a downwind movement of the wind turbine 1 is input into the selection block 13.

In the selection block 13, it is determined, based on the amount of the floating body movement, if the wind turbine pitch movement is upwind or downwind, in particular whether the tower top movement is upwind or downwind. If the wind turbine pitch movement is upwind, the first cut-off frequency 14 is selected and input into the low-pass filter 16. Otherwise, if the wind turbine pitch movement is downwind, the second cut-off frequency 15 is selected and input into the low-pass filter 16.

In the low-pass filter 16, the blade pitch angle reference is then filtered by the first cut-off frequency 14 if the wind turbine pitch movement is upwind. Otherwise, the blade pitch angle reference is filtered by the second cut-off frequency 15 if the wind turbine pitch movement is downwind.

The filtered blade pitch reference is output from the low-pass filter 16 into a comparator 17 which generates a difference between a measured blade pitch and the filtered blade pitch reference. The difference is input from the comparator 17 into pitch system controller 18 which generates a blade pitch signal for feedback-controlling the blade pitch. A blade pitch signal is output from the pitch system controller 18 into a pitch actuator 19 which pitches the corresponding blade 6.

The comparator 17, the pitch system controller 18 and the pitch actuator 19 altogether form a blade pitch control system.

An element of this control strategy is the shutdown low-pass filter 16 added between the blade pitch angle reference block 11 and the blade pitch control system. The strategy can be summarized in the following steps:
a) A shutdown is requested;
b) The blade pitch angle command for shutdown is sent to blade pitch control system through the blade pitch angle reference block 11;
c) The shutdown reference low-pass filter 16 is activated;
d) A floater motion and/or tower top quantity is measured/monitored and used to define the cut-off frequency as follows:
   i. The (upwind) first cut-off frequency 14 is selected if turbine top is moving upwind. This cut-off frequency 14 is low enough to filter out fast pitch commands.
   ii. The (downwind) second cut-off frequency 15 is selected if turbine top is moving downwind. This cut-off frequency 15 is high enough to allow faster pitch commands than when moving upwind.
e. The filtered blade pitch reference is sent to the blade pitch control system.

It should be noted also that, in addition to the blade pitch control, additional blade actuators might be included such as blade add-ons or active flaps which are arranged at a surface of the blade 6. The additional blade actuators modify the aerodynamic behavior of the blade 6. The additional blade actuator is controlled based on an additional blade actuator reference, and the method of this embodiment comprises steps of detecting an amount of a floating body movement, a blade load moment and/or a tower top movement to determine whether a wind turbine pitch movement is upwind or downwind; after having received the stop request, selecting, based on the determination as to whether the wind turbine pitch movement is upwind or downwind, a cut-off frequency of the additional blade actuator reference; if the wind turbine pitch movement is upwind, filtering the additional blade actuator reference by another low-pass filter having a third cut-off frequency; and if the wind turbine pitch movement is downwind, filtering the blade additional blade actuator reference by the other low-pass filter having a fourth cut-off frequency; wherein the third cut-off frequency being lower than the fourth cut-off frequency.

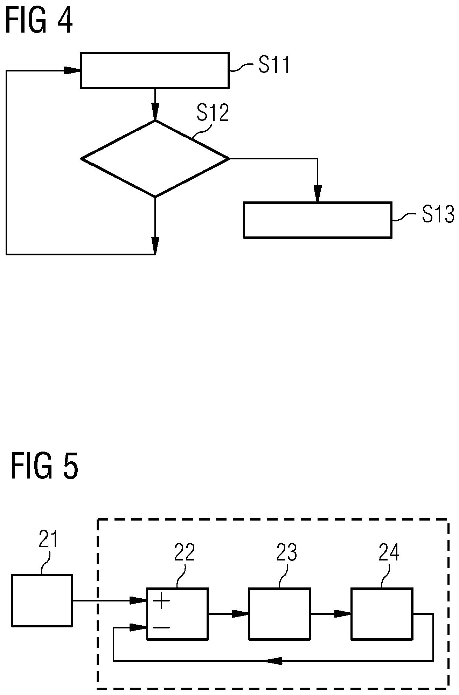

**Fig. 4** shows a flow chart of an embodiment of a method of stopping an operation of the floating wind turbine 1, in particular an embodiment of step S3 in Fig. 2. In a step S11, an amount of a floating body movement, a blade load moment and/or a tower top movement is detected to determine whether a wind turbine pitch movement is upwind or downwind. Based on the result, it is detected when a tower top position is substantially at a most upwind position, i.e., at a reversal point. If it is detected that the tower top position is not substantially at the most upwind position, the method goes back to step S11 to delay stopping the operation of the floating wind turbine 1. Otherwise, if it is detected that the tower top position is substantially at the most upwind position, the method proceeds to a step S13, where the operation of the floating wind turbine 1 is eventually stopped, for example by conventional stopping procedures such as blade pitching, etc.

This control strategy improves the floater pitch motion behavior by computing a time instant for a shutdown procedure that is qualified for a delay. It can be summarized by the following steps:
a) A shutdown is requested;
b) A stop is initiated when the floater pitch velocity transitions from negative to positive (tower top position is substantially at the most upwind point);
c) A normal stop procedure is performed, like ramping down power and increasing blade pitch angles to reduce speed and power. As a consequence, a thrust force is further reduced by the blade pitch angle which comes at an optimum time because the tower is moving forward.

**Fig. 5** shows a block diagram of an embodiment of a method of stopping an operation of the floating wind turbine 1, in particular an embodiment of step S3 in Fig. 2. Generally, a power output from the generator is controlled based on a power output reference.

A speed reference is input from a (rotor) speed reference block 21 into a comparator 22 which generates a difference between a measured rotor speed and the speed reference. The difference is input from the comparator 22 into speed-power controller 23 which controls the rotor speed. When a stop request for stopping the operation of a floating wind turbine 1 is received, the stopping of the operation of the floating wind turbine 1 is delayed, and a power reference correction value is input into the speed-power controller 23 to increase the power reference, thereby reducing a rotor speed. After having reduced the rotor speed, the stopping of the operation of the wind turbine 1 is initiated. Reference sign 24 designates a plant of the wind turbine 1, which outputs the rotor speed measurement.

The method of stopping an operation of the floating wind turbine 1 comprises a step of delaying the stopping of the operation of the floating wind turbine 1, while reducing the power output to reduce a rotor speed. The stopping of the operation of the wind turbine 1 is initiated after having reduced the power output. For example, the stopping of the operation of the wind turbine 1 can be achieved by increasing the blade pitch reference (see Fig. 3) for increasing a blade pitch angle of the blades 6.

The power output reference is advantageously used to produce a counter-torque for a rotor speed deacceleration. The power output reference is reduced according to the rotor speed reduction so that the physical maximum generator torque constraint is verified. The thrust force is reduced because of a lower rotor speed, and a floater motion amplitude is reduced.

This procedure can be combined with the embodiment of Fig. 3 of controlling the command to increase the blade pitch angle until a stop position.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method of stopping an operation of a floating wind turbine (1), said wind turbine (1) comprising a floating body (4), a tower (2) mounted to the floating body (4), a nacelle (3) mounted to the tower (2), a rotating hub rotatable mounted to the nacelle (3) and having a plurality of blades (6), and a generator connected to the hub for generating electric power, the method comprises the steps of:
receiving a stop request for stopping the operation of a floating wind turbine (1);
determining whether or not the stop request is non-critical to allow a delay or attenuation of stopping the operation of the floating wind turbine (1); and
delaying or attenuating the stopping of the operation of the floating wind turbine, when the delay of stopping the operation of the floating wind turbine (1) is allowed, so as to attenuate a wind turbine pitch movement.

2. The method according to the preceding claim, wherein
a blade pitch angle of each blade (6) is controlled based on a blade pitch angle reference, and the method comprises steps of:
detecting an amount of a floating body movement, a blade load moment and/or a tower top movement to determine whether a wind turbine pitch movement is upwind or downwind;
after having received the stop request, selecting, based on the determination as to whether the wind turbine pitch movement is upwind or downwind, a cut-off frequency of a low-pass-filter for the blade pitch angle reference;
if the wind turbine pitch movement is upwind, filtering the blade pitch angle reference by the low-pass filter (16) having a first cut-off frequency (14); and
if the wind turbine pitch movement is downwind, filtering the blade pitch angle reference by the low-pass filter (16) having a second cut-off frequency (15); and
the first cut-off frequency (14) being lower than the second cut-off frequency (15).

3. The method according to any one of the preceding claims, wherein
the wind turbine (1) further comprises an additional blade actuator which is arranged at a surface of the blade (6), wherein the additional blade actuator is controlled based on an additional blade actuator reference, and the method comprises steps of:
detecting an amount of a floating body movement, a blade load moment and/or a tower top movement to determine whether a wind turbine pitch movement is upwind or downwind;
after having received the stop request, selecting, based on the determination as to whether the wind turbine pitch movement is upwind or downwind, a cut-off frequency of another low-pass filter for the additional blade actuator reference;
if the wind turbine pitch movement is upwind, filtering the additional blade actuator reference by the other low-pass filter having a third cut-off frequency; and
if the wind turbine pitch movement is downwind, filtering the blade additional blade actuator reference by the other low-pass filter having a fourth cut-off frequency; and
the third cut-off frequency being lower than the fourth cut-off frequency.

4. The method according to any one of the preceding claims, comprising the steps of:
detecting an amount of a floating body movement, a blade load moment and/or a tower top movement to determine whether a wind turbine pitch movement is upwind or downwind;
delaying the stopping of the operation of the floating wind turbine (1) if the wind turbine pitch movement is upwind;
detecting when a tower top position is substantially at a most upwind position; and
initiating the stopping of the operation of the floating wind turbine after the tower top position substantially has reached the most upwind position.

5. The method according to any one of the preceding claims, wherein
a power output from the generator is controlled based on a power output reference, and the method comprises steps of:
delaying the stopping of the operation of the floating wind turbine (1), while increasing the power output to reduce a rotor speed; and
initiating the stopping of the operation of the wind turbine (1) after having reduced the rotor speed.

6. The method according to the preceding claim, wherein
the stopping of the operation of the wind turbine (1) is achieved by increasing a blade pitch reference for increasing a blade pitch angle of the blades (6).
